# EUROPÄISCHE PATENTSCHRIFT

(11) **EP 4 003 774 B1**
(45) Veröffentlichungstag und Bekanntmachung des Hinweises auf die Patenterteilung: **30.08.2023**
(21) Anmeldenummer: 20740264.5
(22) Anmeldetag: 08.07.2020
(51) Int. Cl.: B60L 15/20, B60L 50/60, B60L 15/38, B60L 15/32, B60L 50/61, B62D 59/04

(54) **VERFAHREN UND VORRICHTUNG ZUM ANSTEUERN EINES ELEKTRISCHEN ANTRIEBS EINES ANHÄNGERFAHRZEUGS**
METHOD AND DEVICE FOR ACTUATING AN ELECTRICAL DRIVE OF A TRAILER VEHICLE
PROCÉDÉ ET DISPOSITIF POUR ACTIVER UN ENTRAÎNEMENT ÉLECTRIQUE D'UN VÉHICULE TRACTÉ

(30) Priorität: 22.07.2019 DE 102019119787
(43) Veröffentlichungstag der Anmeldung: 01.06.2022
(73) Patentinhaber: ZF CV Systems Global GmbH, 3006 Bern (CH)
(72) Erfinder: FLAUM, Nikolai, 30457 Hannover (DE); HESEDING, Johannes, 30169 Hannover (DE); RICKE, Janik, 31311 Uetze (DE); WALLBAUM, Torsten, 31089 Duingen (DE)
(74) Vertreter: Ohlendorf, Henrike
(86) Internationale Anmeldenummer: PCT/EP2020/069206
(87) Internationale Veröffentlichungsnummer: WO 2021/013540

(56) Entgegenhaltungen:
- EP-A1- 2 842 814
- EP-B1- 2 842 814
- DE-A1-102010 042 907

## Beschreibung

Die Erfindung betrifft die Ansteuerung von elektrischen Antrieben in Anhängerfahrzeugen. Insbesondere betrifft die Erfindung hierzu ein Verfahren zum Ansteuern eines elektrischen Antriebs eines Anhängerfahrzeugs sowie Vorrichtungen und Fahrzeuge zum Ausführen des Verfahrens. Ein Anhängerfahrzeug wird durch ein Zugfahrzeug, das beispielsweise ein Nutzfahrzeug ist, gezogen. Derartige durch Nutzfahrzeuge gezogene Anhängerfahrzeuge, die im Folgenden auch kurz Anhänger genannt werden, sind insbesondere Sattelauflieger und Deichselanhänger.

Nutzfahrzeuge, die neben einem Verbrennungsmotor als primäre Antriebsquelle zusätzlich einen elektrischen Antrieb zur Unterstützung eines Verbrennungsmotors aufweisen, sind bekannt. Die elektrischen Antriebe dienen in den Nutzfahrzeugen beispielsweise, um den Verbrennungsmotor in einem energieeffizienten Drehzahlbereich betreiben zu können oder einen zusätzlichen Schub, beispielsweise beim Anfahren oder Bergauffahren, bereitzustellen. Darüber hinaus kann mit elektrischen Antrieben kinetische und potentielle Energie des Fahrzeugs zurückgewonnen und als elektrische Energie in einem Energiespeicher des elektrischen Antriebs gespeichert werden.

Es ist außerdem bekannt, dass auch Anhänger für Nutzfahrzeuge mit einem elektrischen Antrieb ausgestattet werden können, um durch den Anhänger eine zusätzliche Antriebskraft für das Zugfahrzeug, beispielsweise bei einer Bergauffahrt, zur Verfügung zu stellen. In EP 2 842 814 B1 wird ein Steuergerät des Zugfahrzeugs mit einem weiteren Steuergerät im Anhänger verbunden, sodass diese kommunizieren. Das weitere Steuergerät, das vom Steuergerät Steuerbefehle empfängt, steuert dann einen elektrischen Antrieb im Anhängerfahrzeug.

DE 10 2010 042 907 A1 beschreibt ein System zur Rekuperation von kinetischer Energie für einen Fahrzeuganhänger hinter einem Fahrzeug.

Gemäß dem Stand der Technik ist es demnach bekannt, dass ein Zugfahrzeug mit einem Anhängerfahrzeug kommuniziert, um einen Antriebswunsch, beispielsweise in Abhängigkeit einer Gas- oder Bremspedalstellung, vom Zugfahrzeug an das Anhängerfahrzeug zu übermitteln. Wie sich das Anhängerfahrzeug aber tatsächlich verhält und welchen Anteil der Antrieb des Anhängerfahrzeugs am Gesamtantrieb eines Gespanns aus Zugfahrzeug und Anhängerfahrzeug darstellt, ist bislang nur durch aufwändige Sensorik messbar. Dies muss jedoch essentiell bekannt sein, insbesondere um ein Schieben des Anhängerfahrzeugs, das zu instabilem Fahrverhalten führen kann, zu vermeiden. Demnach ist aus dem Stand der Technik bekannt, zusätzliche Sensoren am Zugfahrzeug bereitzustellen, um die tatsächliche Reaktion eines Antriebs durch das Anhängerfahrzeug zu überwachen und den Antrieb dann beispielsweise durch einen neuen Steuerbefehl des Zugfahrzeugs zu regeln.

Somit kann eine Verzögerung oder Beschleunigung des Fahrzeuganhängers über seinen elektrischen Antrieb nur iterativ erfolgen, bis sich an der zusätzlich am Zugfahrzeug angebrachten Sensorik ein richtiger Messwert eingestellt hat, um instabile Fahrzustände zu vermeiden. Daraus resultiert eine verlangsamte Regelkette bei der Antriebsunterstützung sowie auch bei einer Verzögerung, die als Rekuperation für einen elektrischen Antrieb verwendet werden kann. Folge ist eine geringere Effizienz einerseits, wobei andererseits auch nur eingeschränkt oder gar nicht in stabilitätskritischen Situationen, die nicht durch den elektrischen Antrieb verursacht sind und in denen beispielsweise Fahrerassistenzsysteme eingreifen, durch den elektrischen Antrieb unterstützt werden kann. Insbesondere sind durch die bekannten Systeme somit zusätzliche Bauteile notwendig, womit zusätzliche Kosten einhergehen und ein effizienter Einsatz des elektrischen Antriebs ist nicht gewährleistet.

Aufgabe der vorliegenden Erfindung ist es daher, einen elektrischen Antrieb eines Anhängerfahrzeugs in gegenüber dem Stand der Technik verbesserter Weise anzusteuern, wobei die Ansteuerung möglichst mit geringem oder ohne zusätzlichen Bauteilaufwand möglich sein soll und gleichzeitig einen effizienteren zielgerichteten Einsatz des Antriebs ermöglichen soll.

Insbesondere ist es Aufgabe der vorliegenden Erfindung, zumindest einem der zuvor im Stand der Technik genannten Probleme zu begegnen.

Hierzu betrifft die Erfindung ein Verfahren nach Anspruch 1. Demnach umfasst die Erfindung ein Verfahren zum Ansteuern eines elektrischen Antriebs eines Anhängerfahrzeugs mit einem Zugfahrzeug. Das Verfahren dient also zum Ansteuern eines elektrischen Antriebs.

Ein elektrischer Antrieb umfasst vorzugsweise mindestens einen elektrischen Motor, der im motorischen Betrieb oder im generatorischen Betrieb betreibbar ist. Hierzu ist der Motor vorzugsweise über einen steuerbaren Umrichter mit einem Energiespeicher, nämlich einer Batterie oder einem Akkumulator, verbunden. Im motorischen Betrieb versorgt der Umrichter den elektrischen Antrieb mit Energie aus dem Energiespeicher, um ein positives Drehmoment zu erzeugen. Im generatorischen Betrieb wird eine kinetische Energie eines mit dem elektrischen Motor verbundenen Rades in elektrische Energie gewandelt und diese über den Umrichter in den Energiespeicher gespeist und dort gespeichert. Dieser generatorische Betrieb wird auch Rekuperation genannt und dient gleichzeitig zur Abbremsung des Fahrzeugs mit dem elektrischen Antrieb.

Ein Zugfahrzeug umfasst hier insbesondere ein Nutzfahrzeug, wie insbesondere einen Lastkraftwagen oder eine Zugmaschine. Ein Anhängerfahrzeug, das auch kurz Anhänger genannt wird, umfasst beispielsweise einen Sattelauflieger und einen Deichselanhänger, wie beispielsweise einen Zentralachsanhänger oder einen Gelenkdeichselanhänger.

Gemäß dem Verfahren wird eine aktuelle Masse des das Anhängerfahrzeug ziehenden Zugfahrzeugs bestimmt. Eine aktuelle Masse des Zugfahrzeugs wird vorzugsweise mit einem Steuergerät, vorzugsweise einem Bremssteuergerät, des Zugfahrzeugs bestimmt. Hierzu empfängt das Bremssteuergerät beispielsweise die aktuelle Masse von einem weiteren Steuergerät, das die Masse in Abhängigkeit der Luftdrücke von an den Achsen des Zugfahrzeugs angeordneten Luftfedern bestimmt. Vorzugsweise ist die Masse beispielsweise bereits im Bremssteuergerät für Anwendungen, wie beispielsweise eine Traktionskontrolle, oder andere sicherheitsrelevante Systeme bekannt oder kann aus einem Steuergerät eines Luftfedersystems, das die Luftfedern steuert, ausgelesen werden.

Weiter wird gemäß dem Verfahren eine aktuelle Antriebskraft des Zugfahrzeugs bestimmt. Eine aktuelle Antriebskraft entspricht hier vorzugsweise einer Kraft, die mindestens einen Antrieb des Zugfahrzeugs, nämlich beispielsweise einen Verbrennungsantrieb und/oder einen elektrischen Antrieb des Zugfahrzeugs, auf mindestens ein Antriebsrad des Zugfahrzeugs ausübt. Besonders bevorzugt umfasst die Antriebskraft die Gesamtkraft des oder, im Falle von mehreren Antrieben, aller Antriebe, die auf alle Antriebsachsen und/oder alle Antriebsräder des Zugfahrzeugs ausgeübt wird. Diese Antriebskraft wird vorzugsweise als Wert oder zumindest als Wert, aus dem die Antriebskraft ableitbar ist, auf einem CAN-Bus im Zugfahrzeug bereitgestellt. Die Bereitstellung erfolgt beispielsweise von einem Motorsteuergerät oder einem Fahrzeugsteuergerät und kann besonders bevorzugt von einem Bus, bevorzugt durch ein Bremssteuergerät des Zugfahrzeugs, das das Verfahren ausführt, ausgelesen werden.

Weiter wird eine Beschleunigungsanforderung in Abhängigkeit der aktuellen Antriebskraft des Zugfahrzeugs und der aktuellen Masse des Zugfahrzeugs bestimmt und daraufhin der elektrische Antrieb des Anhängerfahrzeugs in Abhängigkeit der Beschleunigungsanforderung angesteuert, insbesondere, um eine gewünschte Antriebskraft durch ein Drehmoment mit dem elektrischen Antrieb, nämlich insbesondere dem elektrischen Motor oder den elektrischen Motoren, zu erzeugen.

Dank der Bestimmung der aktuellen Antriebskraft des Zugfahrzeugs sowie der aktuellen Masse des Zugfahrzeugs lässt sich die Beschleunigungsanforderung in Abhängigkeit einer sich aus der aktuellen Antriebskraft und der aktuellen Masse des Zugfahrzeugs ergebenden Beschleunigung des Zugfahrzeugs bestimmen. Unter Kenntnis der Beschleunigung des Zugfahrzeugs kann dann eine Beschleunigungsanforderung für den elektrischen Antrieb in ergänzender Weise ohne zusätzliche Sensorik bestimmt werden, um auch eine geeignete Beschleunigung des Anhängerfahrzeugs durch entsprechendes Ansteuern des elektrischen Antriebs zu erreichen. Indem eine gewünschte Beschleunigung des Anhängerfahrzeugs durch die Beschleunigungsanforderung in Übereinstimmung mit einer Beschleunigung des Zugfahrzeugs abgestimmt ist, kann die Gefahr eines Ziehens oder Aufschiebens des Anhängerfahrzeugs vermindert oder reduziert werden, ohne dass zusätzliche Sensoren beispielsweise im Bereich der Deichsel oder Kupplung zwischen Zugfahrzeug und Anhängerfahrzeug angeordnet werden müssen, um das Verhalten des Anhängerfahrzeugs zu überwachen.

Eine Sensorik zum Bestimmen der aktuellen Masse und der aktuellen Antriebskraft ist demgegenüber ohnehin in aktuellen Fahrzeugen, insbesondere Nutzfahrzeugen, vorhanden, sodass auf die vorhandene Sensorik zurückgegriffen und auf eine zusätzliche Sensorik und somit zusätzliche Bauteile verzichtet werden kann. Das Verfahren kann dabei vorzugsweise in einer Steuerung des Zugfahrzeugs, insbesondere einem Bremssteuergerät, ausgeführt werden, indem in der Regel zumindest die aktuelle Masse des Zugfahrzeugs, aber auch eine aktuelle Antriebskraft des Zugfahrzeugs, bereits verfügbar ist.
Gemäß einer ersten Ausführungsform wird die Beschleunigungsanforderung in Abhängigkeit der aktuellen Masse des Zugfahrzeugs und zusätzlich in Abhängigkeit der aktuellen Masse des Anhängerfahrzeugs bestimmt. Vorzugsweise wird hierzu die Masse des Anhängerfahrzeugs bestimmt. Die Masse des Anhängerfahrzeugs ist beispielsweise, analog zur Bestimmung beim Zugfahrzeug, aus einem Druck vorhandener Luftfedern des Anhängerfahrzeugs ableitbar, also bestimmbar oder messbar. Vorzugsweise ist die Masse des Anhängerfahrzeugs beispielsweise im Anhängerfahrzeug für ein Steuergerät, insbesondere ein Anhängerbremssteuergerät, des Anhängerfahrzeugs bereitgestellt oder diesem bekannt und kann so in Form eines Signals oder Datensignals an ein Steuergerät, insbesondere das Bremssteuergerät, des Zugfahrzeugs, das das erfindungsgemäße Verfahren ausführt, übertragen werden.

Alternativ ist es auch möglich, dass zunächst eine aus der aktuellen Antriebskraft und der aktuellen Masse des Zugfahrzeugs bestimmte aktuelle Beschleunigung des Zugfahrzeugs in Form eines Signals oder Datensignals an das Steuergerät, insbesondere das Bremssteuergerät, des Anhängerfahrzeugs vom Steuergerät, insbesondere des Bremssteuergeräts, des Zugfahrzeugs übertragen wird und dann die Beschleunigungsanforderung in Abhängigkeit der Masse des Anhängerfahrzeugs sowie der aktuellen Antriebskraft des Zugfahrzeugs und der aktuellen Masse des Zugfahrzeugs im Bremssteuergerät, vorzugsweise Bremssteuergerät des Anhängerfahrzeugs, bestimmt wird.

Dank der Berücksichtigung der Masse des Anhängerfahrzeugs bei der Bestimmung der Beschleunigungsanforderung kann so in einfacher Weise eine gewünschte Antriebskraft für den elektrischen Antrieb des Anhängerfahrzeugs bestimmt werden. Vorzugsweise ist die aktuelle Beschleunigung des Zugfahrzeugs bereits aufgrund der bestimmten aktuellen Antriebskraft und der bestimmten aktuellen Masse des Zugfahrzeugs bekannt oder daraus ableitbar, sodass sich aus dieser aktuellen Beschleunigung des Zugfahrzeugs eine gewünschte Beschleunigung des Anhängerfahrzeugs ableiten lässt. Aus der gewünschten Beschleunigung des Anhängerfahrzeugs ist wiederum unter Berücksichtigung der nun zusätzlich bestimmten Masse des Anhängerfahrzeugs in einfacher Weise in eine gewünschte Antriebskraft des elektrischen Antriebs bestimmbar. Eine gewünschte Antriebskraft des elektrischen Antriebs in Form der Beschleunigungsanforderung lässt sich somit auf einfache Weise noch genauer bestimmen.

Gemäß einer weiteren Ausführungsform umfasst die Beschleunigungsanforderung einen Wert für eine vom elektrischen Antrieb gewünschte Antriebskraft. Der Wert für eine gewünschte Antriebskraft, der der Beschleunigungsanforderung entspricht, wird beispielsweise im Bremssteuergerät bestimmt, indem zunächst die Beschleunigung des Zugfahrzeugs in Abhängigkeit der aktuellen Antriebskraft des Zugfahrzeugs und der aktuellen Masse des Zugfahrzeugs bestimmt wird. In Abhängigkeit der Beschleunigung des Zugfahrzeugs wird dann eine anzufordernde oder gewünschte Beschleunigung des Anhängerfahrzeugs bestimmt und in Abhängigkeit der anzufordernden oder gewünschten Beschleunigung des Anhängerfahrzeugs und der aktuellen Masse des Anhängerfahrzeugs wird wiederum die vom elektrischen Antrieb gewünschte Antriebskraft bestimmt.

Wird demgegenüber gemäß einer weiteren Ausführungsform ein Wert einer gewünschten Beschleunigung in Form der Beschleunigungsanforderung vom Zugfahrzeug an das Anhängerfahrzeug übertragen, so wird der Wert der aktuellen Antriebskraft des Zugfahrzeugs und der aktuellen Masse des Zugfahrzeugs bestimmt. Erst im Anhängerfahrzeug, insbesondere mit dem Anhängerbremssteuergerät, wird dann in Abhängigkeit der gewünschten Beschleunigung und der aktuellen Masse des Anhängerfahrzeugs die gewünschte Antriebskraft für den elektrischen Antrieb bestimmt.

Die Ansteuerung des Antriebs ist somit in einfacher Art und Weise von einem Anhängerbremssteuergerät sowie einem Bremssteuergerät des Zugfahrzeugs ausführbar.

Gemäß einer weiteren Ausführungsform ist die gewünschte Beschleunigung des Anhängerfahrzeugs kleiner oder gleich der aktuellen Beschleunigung des Zugfahrzeugs oder wird derart gewählt.

Ein Schieben des Zugfahrzeugs wird so verhindert, da das Zugfahrzeug immer eine vergleichsweise gleiche oder größere Beschleunigung im Antriebsfall oder im Bremsfall ausführt als das Anhängerfahrzeug. Hierdurch werden unkontrollierbare Fahrzustände des Gespanns, bestehend aus Zugfahrzeug und Anhängerfahrzeug, vermieden.

Gemäß einer weiteren Ausführungsform wird die aktuelle Beschleunigung des Zugfahrzeugs in Abhängigkeit des Ergebnisses einer Division der aktuellen Antriebskraft durch die aktuelle Masse des Zugfahrzeugs bestimmt oder entspricht diesem Ergebnis. Zusätzlich oder alternativ wird die gewünschte Antriebskraft des Anhängerfahrzeugs in Abhängigkeit des Ergebnisses eines Produkts aus der aktuellen Masse des Anhängerfahrzeugs und der gewünschten Beschleunigung des Anhängerfahrzeugs bestimmt. In einfacher Weise über die bekannte Beziehung F = m*a sind so rechnerisch Werte für die gewünschte Antriebskraft bestimmbar.

Gemäß einer weiteren Ausführungsform wird die aktuelle Beschleunigung des Zugfahrzeugs zusätzlich in Abhängigkeit eines aktuellen Schlupfs mindestens eines angetriebenen Rades des Zugfahrzeugs bestimmt.

Ein aktueller Schlupf des Zugfahrzeugs umfasst hier vorzugsweise einen Antriebsschlupf und einen Bremsschlupf, die das Verhältnis der Drehzahl eines angetriebenen Rades des Zugfahrzeugs zu einem nichtangetriebenen und daher formschlüssig mitlaufenden Rades des Zugfahrzeugs oder zu einer Referenzgeschwindigkeit des Fahrzeugs beschreiben. Ein Schlupfwert, also ein Wert des Schlupfs, ist demnach, wenn es sich um einen Antriebsschlupf handelt, größer als Null und im Fall, dass es sich um einen Bremsschlupf handelt, kleiner als Null.

Das Verfahren umfasst vorzugsweise das Bestimmen des aktuellen Schlupfs, wobei ein Bestimmen des Schlupfs beispielsweise durch Bestimmen vorhandener Zustandswerte des Zugfahrzeugs und durch Ableiten des Schlupfs aus diesen Zustandswerten gewonnen werden kann oder auch ein indirektes oder direktes Messen des Schlupfs möglich ist.

Eine vorteilhafte Ausführungsform umfasst das Bestimmen des Schlupfs, indem Signale von Raddrehzahlsensoren mindestens eines angetriebenen und eines nichtangetriebenen Rades aufgenommen werden, um so durch Vergleich der Raddrehzahlen einen Schlupf zu bestimmen. Gemäß einer weiteren Ausführungsform wird die Raddrehzahl nur des angetriebenen Rades mit einer aktuellen Geschwindigkeit des Fahrzeugs, die auch als Referenzgeschwindigkeit bezeichnet werden kann, verglichen.

Es ist vorteilhaft, den aktuellen Schlupf mindestens eines Rades des Zugfahrzeugs bei der Bestimmung der Beschleunigungsanforderung, insbesondere zum Bestimmen der aktuellen Beschleunigung des Zugfahrzeugs, zu berücksichtigen, da eine tatsächliche reale Beschleunigung des Zugfahrzeugs davon abhängig ist, wie beispielsweise Reibwerte des Untergrunds, auf dem der Antrieb des Zugfahrzeugs durch die Räder übertragen wird, ausgebildet sind. Ist beispielsweise eine vergleichsweise glatte Fahrbahn vorhanden, so ist die tatsächliche Beschleunigung des Zugfahrzeugs geringer als eine allein aus der aktuellen Antriebskraft und der Masse des Zugfahrzeugs bestimmte Beschleunigung. Dies kann durch Berücksichtigen des Schlupfs korrigiert und so die Bestimmung der aktuellen Beschleunigung verbessert werden.

Gemäß einer weiteren Ausführungsform umfasst die Beschleunigungsanforderung einen Maximalwert, insbesondere einer gewünschten Antriebskraft, für ein mit dem elektrischen Antrieb zu erzeugendes Drehmoment oder zu erzeugende Antriebskraft. Demnach wird also vorzugsweise im Falle einer Beschleunigungsanforderung mit einem positiven Wert von einem Maximalwert für eine zu erzeugende oder gewünschte Antriebskraft durch den elektrischen Antrieb ausgegangen. Das heißt, dass beispielsweise bei der Geschwindigkeitserhöhung oder beim Anfahren des Zugfahrzeugs eine Beschleunigungsanforderung mit einem Maximalwert, also einem positiven Wert, an den elektrischen Antrieb übertragen wird. Dieser Maximalwert ist durch das Bestimmen der Beschleunigungsanforderung so festgelegt, dass, wenn eine Antriebskraft, also beispielsweise ein daraus abgeleitetes oder entsprechendes Antriebsdrehmoment, mit dem elektrischen Antrieb erzeugt wird, das diesem Maximalwert entspricht, das Anhängerfahrzeug das Zugfahrzeug nicht oder gerade noch nicht schiebt. Die Fahrstabilität des Zugfahrzeugs, insbesondere bei Kurvenfahrten, kann somit weiterhin gewährleistet werden. Vorzugsweise wird die Beschleunigungsanforderung über einen CAN-ISO 11992-2 Bus von einem Bremssteuergerät des Zugfahrzeugs an ein Bremssteuergerät des Anhängerfahrzeugs übertragen.

Gemäß einer weiteren Ausführungsform erzeugt der elektrische Antrieb des Anhängerfahrzeugs eine Antriebskraft in Abhängigkeit eines Ansteuersignals. Das Ansteuersignal wird weiter in Abhängigkeit der Beschleunigungsanforderung und eines Ladezustands mindestens eines Energiespeichers des elektrischen Antriebs erzeugt. Das Ansteuersignal wird aus der Beschleunigungsanforderung vorzugsweise mit einem Bremssteuergerät des Anhängerfahrzeugs erzeugt.

Gemäß der Ausführungsform wird berücksichtigt, dass im Falle eines beispielsweise nur noch gering geladenen Energiespeichers und einer Beschleunigungsanforderung mit einem positiven Wert ein vergleichsweise geringeres Antriebsdrehmoment oder Antriebskraft mit dem Ansteuersignal erzeugt wird als bei einem vergleichsweise höher oder vollständig geladenen Energiespeicher. Eine bestimmte Restenergie im Energiespeicher kann somit für Notsituationen, in denen der elektrische Antrieb benötigt wird, zurückgehalten werden. Gleichermaßen wird im Falle, dass die Beschleunigungsanforderung einen negativen Wert umfasst, beispielsweise bei einem vergleichsweise geringen Ladezustand des Energiespeichers, ein hohes negatives Antriebsdrehmoment oder Antriebskraft, also ein Bremsmoment, durch das Ansteuersignal mit dem elektrischen Antrieb eingesteuert bzw. eingeregelt, das zu einem möglichst schnellen bzw. hohen Laden des Energiespeichers beiträgt.

Gemäß einer weiteren Ausführungsform wird das Ansteuersignal in Abhängigkeit mindestens einer aktuellen Drehzahl mindestens eines elektrischen Motors des elektrischen Antriebs erzeugt. Hierbei wird der Wirkungsgrad des Motors, der abhängig von der aktuellen Drehzahl ist, berücksichtigt und beispielsweise nur dann, wenn ein akzeptabler Wirkungsgrad vorliegt, auch der elektrische Antrieb als Antriebsunterstützung für das Zugfahrzeug eingesetzt.

Gemäß einer weiteren Ausführungsform ist im elektrischen Antrieb ein Motordrehzahl-Drehmomentkennfeld festgelegt, das vorzugsweise in Abhängigkeit einer Ladung des Energiespeichers des elektrischen Antriebs verschiebbar ist.

Das Ansteuersignal wird weiter derart erzeugt, dass der elektrische Antrieb ein Antriebsdrehmoment oder eine Antriebskraft mit einem Wert erzeugt, der bei gegebener Drehzahl innerhalb des Kennfelds liegt. Eine Drehzahl wird demnach gemessen oder anhand der aktuellen Betriebsparameter bestimmt und anhand des Kennfeldes ein Drehmoment oder eine Kraft bestimmt, das bzw. die im Kennfeld liegt und gleichzeitig vorzugsweise nicht einen durch die Beschleunigungsanforderung vorgegebenen Maximalwert überschreitet.

Somit kann sichergestellt werden, dass mit dem elektrischen Antrieb immer ein Antriebsdrehmoment oder Antriebskraft erzeugt wird, das bzw. die bezüglich eines akzeptablen Wirkungsgrads des elektrischen Antriebs erzeugt wird. Entsprechend ist das Motordrehzahl-Drehmomentkennfeld vorzugsweise so festgelegt oder vorbestimmt, dass dieses Antriebsdrehmomente bei Motordrehzahlen umfasst, die oberhalb eines vordefinierten Wirkungsgrads liegen.

Gemäß einer weiteren Ausführungsform sendet der elektrische Antrieb ein Zustandssignal an das Zugfahrzeug, das zumindest umfasst, welches aktuelle Antriebsdrehmoment oder Antriebskraft der elektrische Antrieb aktuell erzeugt. Das Zustandssignal umfasst demnach beispielsweise das oder ein aus dem Ansteuersignal abgeleitetes Signal.

Somit kann der Antrieb des Zugfahrzeugs bei einem Beschleunigungswunsch oder einem Bremswunsch des Fahrers in Abhängigkeit des Anteils des Antriebsdrehmoments, das durch den elektrischen Antrieb aktuell erzeugt wird, ein Antriebsdrehmoment mit dem Zugfahrzeug, das hiervon abhängig ist, erzeugen.

Alternativ oder zusätzlich umfasst das Zustandssignal die aktuelle Masse des Anhängerfahrzeugs. Das Zustandssignal wird vorzugsweise über einen CAN-ISO 11992-2 Bus vom Anhängerbremssteuergerät zum Bremssteuergerät des Zugfahrzeugs übertragen.

Gemäß einer weiteren Ausführungsform umfasst das Zustandssignal einen Schlupf des Fahrzeuganhängers, nämlich insbesondere eines angetriebenen Rades des Fahrzeuganhängers. Diese Information über den Schlupf des Fahrzeuganhängers dient zum Bestimmen der Beschleunigungsanforderung, die zusätzlich in Abhängigkeit des aktuellen Schlupfs des Anhängerfahrzeugs bestimmt wird. Vorzugsweise dient diese Information auch, um instabile Fahrzustände des Fahrzeuganhängers zu detektieren und darauf reagieren zu können.

Gemäß einer weiteren Ausführungsform wird das Verfahren mit einem Bremssteuergerät des Zugfahrzeugs und zusätzlich oder alternativ mit einem Bremssteuergerät des Anhängerfahrzeugs, nämlich einem Anhängerbremssteuergerät, ausgeführt. Die Bremssteuergeräte des Zugfahrzeugs und des Anhängerfahrzeugs sind insbesondere bereits nach dem Stand der Technik eingerichtet, den aktuellen Schlupf einzelner Räder, die Massen der jeweiligen Fahrzeuge und aktuelle Antriebskräfte zu detektieren und dienen so zur besonders einfachen Umsetzung des Verfahrens. Vorzugsweise sind die Bremssteuergeräte des Zugfahrzeugs und des Anhängerfahrzeugs über einen CAN-BUS 11992-2, der über eine elektrische Leitung realisiert ist, miteinander verbunden. Die Nachricht EBS 11 kann hierbei, da sie bislang standardisiert nicht verwendet wird, zur Kommunikation, insbesondere zur Übertragung der Beschleunigungsanforderung verwendet werden.

Weiter umfasst die Erfindung ein Steuergerät, insbesondere eines Zugfahrzeugs oder eines Anhängerfahrzeugs, zum Ausführen des Verfahrens nach einer der vorgenannten Ausführungsformen. Das Steuergerät ist vorzugsweise ein Bremssteuergerät des Zugfahrzeugs oder ein Bremssteuergerät des Anhängerfahrzeugs, das auch Anhängerbremssteuergerät genannt wird. Das Steuergerät ist hierbei im Falle eines Steuergeräts des Zugfahrzeugs eingerichtet, die aktuelle Masse eines das Anhängerfahrzeug ziehenden Zugfahrzeugs sowie eine aktuelle Antriebskraft des Zugfahrzeugs zu bestimmen. Weiter wird mit dem Bremssteuergerät des Zugfahrzeugs in Abhängigkeit der aktuellen Masse und der aktuellen Antriebskraft eine Beschleunigungsanforderung erzeugt und die Beschleunigungsanforderung zum Ansteuern des elektrischen Antriebs an ein Anhängerbremssteuergerät ausgesendet. Vorzugsweise ist das Bremssteuergerät des Zugfahrzeugs auch eingerichtet, eine vom Anhängerbremssteuergerät bestimmte Masse des Anhängerfahrzeugs zu bestimmen, um diese bei der Bestimmung der Beschleunigungsanforderung zu berücksichtigen. Weiter ist das Bremssteuergerät des Zugfahrzeugs eingerichtet, den aktuellen Schlupf mindestens eines angetriebenen Rades des Anhängerfahrzeugs von einem Anhängerbremssteuergerät zu empfangen, nachdem dieses vom Anhängerbremssteuergerät bestimmt wurde, und diesen Schlupf ebenfalls zur Bestimmung der Beschleunigungsanforderung zu berücksichtigen.

Demnach ist das Steuergerät im Falle eines als Anhängerbremssteuergerät ausgebildeten Steuergeräts eingerichtet, eine Beschleunigungsanforderung vom Zugfahrzeug zu empfangen und hierdurch einen elektrischen Antrieb des Anhängerfahrzeugs anzusteuern. Insbesondere weist ein derartiges Anhängerbremssteuergerät einen Speicher für ein Motordrehzahl-Drehmomentkennfeld auf, um ein Ansteuersignal für den elektrischen Antrieb zu erzeugen, der abhängig von der Beschleunigungsanforderung und dem Motordrehzahl-Drehmomentkennfeld ist. Außerdem ist das Anhängerbremssteuergerät vorzugsweise eingerichtet, ein Zustandssignal an ein Bremssteuergerät des Zugfahrzeugs zu senden. Das Zustandssignal umfasst ein aktuelles Drehmoment des elektrischen Antriebs, mindestens einen Schlupf mindestens eines Rades des Anhängerfahrzeugs und/oder die Masse des Anhängerfahrzeugs.

Außerdem betrifft die Erfindung ein Zugfahrzeug mit einem Bremssteuergerät, insbesondere dem zuvor genannten Steuergerät, zum Ausführen des Verfahrens nach einer der vorgenannten Ausführungsformen. Weiter betrifft die Erfindung ein Anhängerfahrzeug mit einem Anhängerbremssteuergerät, insbesondere mit dem zuvor genannten Anhängerbremssteuergerät, zum Ausführen des Verfahrens nach einer der vorgenannten Ausführungsformen. Zuletzt umfasst die Erfindung ein Gespann aus dem Zugfahrzeug und dem Anhängerfahrzeug.

Weitere Ausführungsformen ergeben sich anhand der in den Figuren näher erläuterten Ausführungsbeispiele. Hierbei zeigen
- Fig. 1: ein Gespann aus einem Zugfahrzeug und einem Anhängerfahrzeug,
- Fig. 2: die Schritte eines Ausführungsbeispiels des Verfahrens,
- Fig. 3: Schritte zum Bestimmen einer Beschleunigungsanforderung,
- Fig. 4: ein Motordrehzahl-Drehmomentkennfeld und
- Fig. 5: eine Abhängigkeit der Kennfeldverschiebung eines Ladezustands eines Energiespeichers.

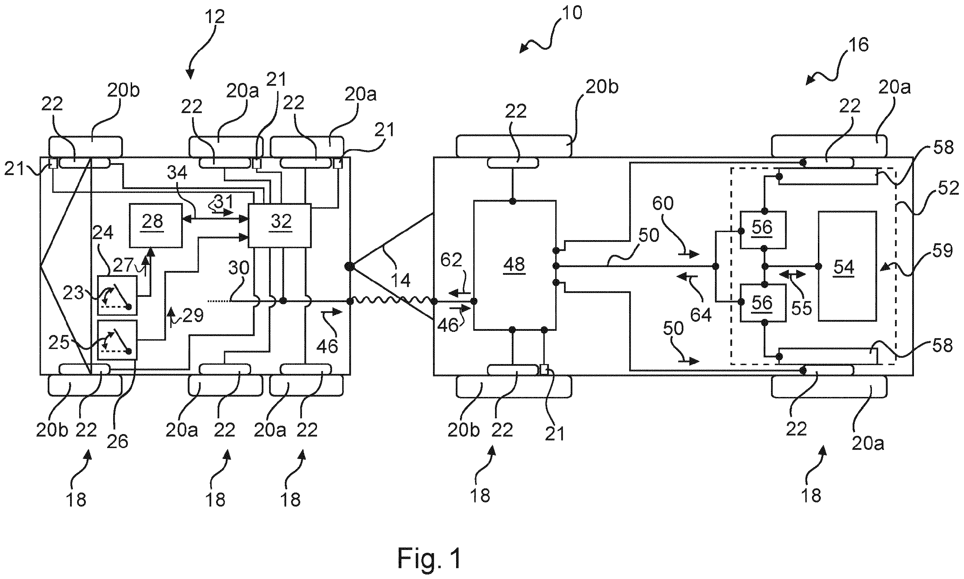

Fig. 1 zeigt ein Gespann 10. Das Gespann 10 umfasst ein Zugfahrzeug 12, das beispielsweise ein Nutzfahrzeug ist. Das Zugfahrzeug 12 ist über eine Deichsel 14 mit einem Anhängerfahrzeug 16 des Gespanns 10 verbunden. Das Anhängerfahrzeug 16 ist somit durch das Zugfahrzeug 12 ziehbar. Das Zugfahrzeug 12 sowie das Anhängerfahrzeug 16 umfassen jeweils mehrere Achsen 18, die jeweils zwei Räder 20a, 20b aufweisen. Die Räder 20a sind angetriebene Räder und gehören so zu einer Antriebsachse 18 und die Räder 20b sind antriebslose Räder und gehören zu einer nichtangetriebenen Achse 18. Antriebslose Räder 20b bezeichnen hier nichtangetriebene Räder. Jedes der Räder 20a, 20b ist mit einer Reibbremse 22 ausgestattet, um im Falle eines Bremswunsches die Räder 20a, 20b zu bremsen. Mindestens eine der Achsen 18 des Zugfahrzeugs 12 ist durch einen Verbrennungsmotor oder einen elektrischen Antrieb angetrieben, wobei ein Verbrennungsmotor oder ein elektrischer Antrieb des Zugfahrzeugs 12 zur besseren Übersicht in Fig. 1 nicht dargestellt ist.

Zum Antreiben des Zugfahrzeugs 12 wird durch Variation einer Gaspedalstellung 23 eines Gaspedals 24 und durch Variation einer Bremspedalstellung 25 eines Bremspedals 26 durch einen Bediener des Zugfahrzeugs 12 ein Wunsch einer Geschwindigkeitserhöhung 27 bzw. ein Bremswunsch 29 signalisiert. Der Wunsch einer Geschwindigkeitserhöhung 27 oder ein Bremswunsch 29 wird gemäß einem hier nicht dargestellten alternativen Ausführungsbeispiel von einer Steuerung erzeugt, die einen autonomen Betrieb oder einen Fahrerassistenzbetrieb steuert.

Im hier dargestellten Ausführungsbeispiel ist zur Signalisierung das Gaspedal 24 mit einem Fahrzeugsteuergerät 28 und das Bremspedal 26 mit einem Bremssteuergerät 32 verbunden. Das Fahrzeugsteuergerät 28 übermittelt Steuersignale zum Ansteuern des nicht dargestellten Antriebs auf einen mit dem Fahrzeugsteuergerät 28 verbundenen, nicht dargestellten Bus. Das Fahrzeugsteuergerät 28 übermittelt aus dem Wunsch einer Geschwindigkeitserhöhung 27 eine angeforderte positive Beschleunigung 31 und übergibt diese über eine Verbindung 34 auch an das Bremssteuergerät 32. Aus der angeforderten positiven Beschleunigung 31 lässt sich im Bremssteuergerät 32 die aktuelle Antriebskraft des Zugfahrzeugs 12 bestimmen. Das Bremssteuergerät 32 überwacht auch einen aktuellen Schlupf mindestens eines angetriebenen Rades 20a. Hierzu sind Raddrehzahlsensoren 21 an den Rädern 20a, 20b vorgesehen. Wird eine Differenzdrehzahl zwischen einem angetriebenen Rad 20a und einem nichtangetriebenen Rad 20b detektiert, so wird der Schlupf im Bremssteuergerät 32 detektiert.

Zur Bestimmung des Maßes einer Unterstützung durch einen zusätzlichen elektrischen Antrieb wird im Bremssteuergerät 32 neben der aktuellen Antriebskraft eine aktuelle Masse 92 des Zugfahrzeugs 12 bestimmt und eine Beschleunigungsanforderung 46 in Abhängigkeit der aktuellen Antriebskraft und der aktuellen Masse 92 erzeugt und auf einem CAN-ISO 11992-2 Bus 30 ausgesendet. Der Bus 30 ist mit einem Anhängerbremssteuergerät 48 des Anhängerfahrzeugs 16 verbunden, an das die Beschleunigungsanforderung 46 übertragen wird.

Mit dem Anhängerbremssteuergerät 48, das die Beschleunigungsanforderung 46 über den Bus 30 empfängt, ist weiter ein elektrischer Antrieb 52 über einen weiteren Bus 50 verbunden. Der elektrische Antrieb 52 umfasst einen Energiespeicher 54, der wiederaufladbar ist und auch als Akkumulator bezeichnet werden kann. Neben dem Energiespeicher 54 umfasst der elektrische Antrieb 52 zwei Umrichter 56, die mit der Energie des Energiespeichers 54 elektrische Motoren 58 versorgen, um ein positives Drehmoment zu erzeugen. Der Energiespeicher 54, die Umrichter 56 und die elektrischen Motoren 58 entsprechen Komponenten 59 des elektrischen Antriebs 52. Gemäß einem alternativen, hier nicht dargestellten Ausführungsbeispiel ist nur ein elektrischer Motor 58 vorgesehen, der auch nur einen Umrichter 56 aufweist und über ein Differential zwei oder mehrere Räder 20a antreibt.

Die elektrischen Motoren 58 in Fig. 1 können auch im Generatorbetrieb oder generatorisch betrieben werden, sodass elektrische Energie 55 über die Umrichter 56 zurück in den Energiespeicher 54 gespeist wird. Der Umrichter 56 des elektrischen Antriebs 52 ist mit dem Anhängerbremssteuergerät 48 über den weiteren Bus 50 verbunden, um ein Ansteuersignal 60 vom Anhängerbremssteuergerät 48 zu empfangen, das im Anhängerbremssteuergerät 48 in Abhängigkeit der Beschleunigungsanforderung 46 erzeugt wird.

Ein Ansteuern der Umrichter 56, das in Abhängigkeit des Ansteuersignals 60 erfolgt, gibt einerseits vor, ob die elektrischen Motoren 58 im Generatorbetrieb oder Motorbetrieb betrieben werden sollen und welches Drehmoment hierbei aufgewendet werden soll. Das Drehmoment wird vorzugsweise aus einer gewünschten Antriebskraft, die in der Beschleunigungsanforderung übertragen wird, bestimmt. Im Falle des Betriebs der elektrischen Motoren 58 im motorischen Betrieb oder im Motorbetrieb wird von einem positiven Drehmoment gesprochen, während das Drehmoment, also ein Wert des Drehmoments im generatorischen Betrieb der elektrischen Motoren 58, als negatives Drehmoment bezeichnet wird oder festgelegt ist.

Zum Ansteuern des elektrischen Antriebs 52, nämlich insbesondere der Umrichter 56, wird demnach von dem Anhängerbremssteuergerät 48 über den weiteren Bus 50 das Ansteuersignal 60 an den elektrischen Antrieb 52 gesendet und dem Ansteuersignal 60 im vorliegenden Fall zwei, vorzugsweise der Antriebskraft entsprechende, Drehmomentwerte entnommen, mit denen radindividuelle Antriebsdrehmomente erzeugt werden. Vorzugsweise sendet der elektrische Antrieb 52 auch ein Statussignal 64 an das Anhängerbremssteuergerät 48, um dem Anhängerbremssteuergerät 48 beispielsweise oder unter anderem mitteilen zu können, welches aktuell verfügbare Drehmoment oder welche aktuell verfügbare Drehmomentänderung durch den elektrischen Antrieb 52 zum aktuellen Zeitpunkt bereitgestellt werden kann. Die aktuell verfügbaren Drehmomente oder Drehmomentänderungen sind beispielsweise abhängig vom aktuellen Betriebszustand des elektrischen Antriebs 52. Außerdem oder alternativ umfasst das Statussignal 64 das aktuelle Drehmoment, das von dem oder den elektrischen Motoren 58 zurzeit erzeugt wird.

Das Anhängerbremssteuergerät 48 ist außerdem sowie auch das Bremssteuergerät 32 des Zugfahrzeugs 12 mit Drehzahlsensoren 21 verbunden, um einen Schlupf mindestens eines angetriebenen Rades 20a des Anhängerfahrzeugs 16 zu überwachen oder zu bestimmen. Weiter sendet das Anhängerbremssteuergerät 48 ein Zustandssignal 62 an das Bremssteuergerät 32 des Zugfahrzeugs 12, in dem einerseits das oder zumindest einige der Informationen, die im Statussignal 64 enthalten sind, enthalten ist. Außerdem umfasst das Zustandssignal 62 vorzugsweise auch den Schlupf des mindestens einen angetriebenen Rades 20a des Anhängerfahrzeugs 16. Dies kann ebenfalls im Bremssteuergerät 32 des Zugfahrzeugs 12 zum Erzeugen der Beschleunigungsanforderung 46 berücksichtigt werden. Im Zustandssignal 62 wird außerdem oder alternativ eine im Anhängerbremssteuergerät 48 bestimmte Masse des Anhängerfahrzeugs 16 an das Bremssteuergerät 32 des Zugfahrzeugs übertragen. Diese Masse 98 des Anhängerfahrzeugs 16 wird ebenfalls vorzugsweise bei der Bestimmung der Beschleunigungsanforderung 46 berücksichtigt.

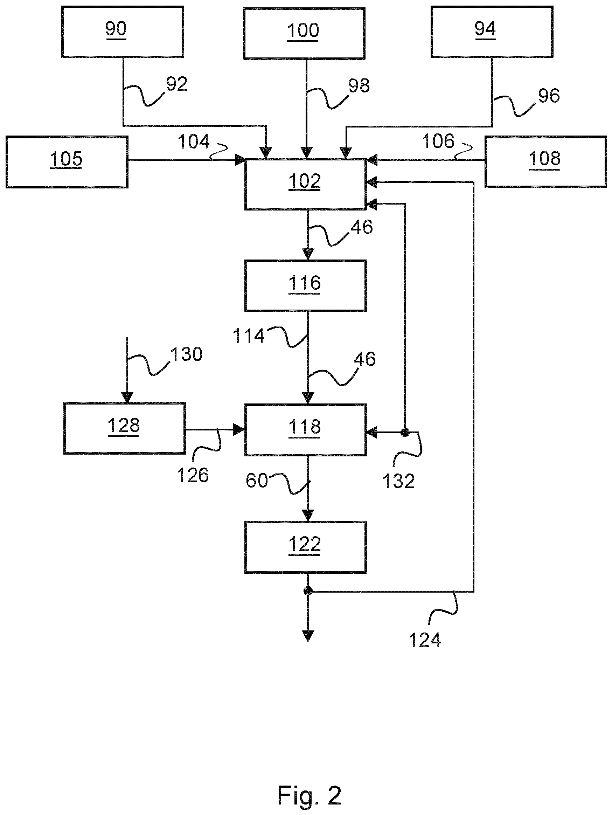

Fig. 2 zeigt die Schritte eines Ausführungsbeispiels des Verfahrens. Zunächst wird in einem Schritt 90 eine aktuelle Masse 92 eines Zugfahrzeugs 12 bestimmt. Vorzugsweise zeitgleich wird in einem Schritt 94 eine aktuelle Antriebskraft 96 eines Antriebs des Zugfahrzeugs 12 bestimmt. Außerdem wird eine Masse 98 des Anhängerfahrzeugs 16 in einem Schritt 100 bestimmt. Die aktuelle Masse 92 des Zugfahrzeugs 12, die aktuelle Masse 98 des Anhängerfahrzeugs 16 sowie die aktuelle Antriebskraft 96 des Zugfahrzeugs 12 werden einem Schritt 102 zugeführt, in den eine Beschleunigungsanforderung 46 in Abhängigkeit dieser Werte bestimmt wird. Dem Schritt 102 wird neben den Massen 92, 98 und der aktuellen Antriebskraft 96 ebenfalls zur Bestimmung der Beschleunigungsanforderung 46 ein gemessener oder detektierter Schlupf 104 des Zugfahrzeugs 12, der in einem Schritt 105 bestimmt wurde, sowie ein gemessener oder detektiert Schlupf 106 des Anhängerfahrzeugs 16, der in einem Schritt 108 bestimmt wurde, zugeführt.

Die Beschleunigungsanforderung 46 wird dann in einem Schritt 116 an ein Anhängerbremssteuergerät 48 übertragen und mit dem Anhängerbremssteuergerät 48 im Schritt 118 ein Ansteuersignal 60 zum Ansteuern eines elektrischen Antriebs 52 in Abhängigkeit der Beschleunigungsanforderung 46 erzeugt. Hierbei wird das Beschleunigungssignal als Maximalwert 114 interpretiert. In Abhängigkeit des Ansteuersignals 60 wird dann in einem Schritt 122 eine gewünschte Antriebskraft 124 mit einem elektrischen Antrieb 52 erzeugt. Zum Bestimmen des Ansteuersignals 60 im Schritt 118 wird dem Schritt 118 ein Motordrehzahl-Drehmomentkennfeld 126 zugeführt, das für den elektrischen Antrieb 52 vordefiniert und in dem Anhängerbremssteuergerät 48 hinterlegt ist. Das Motordrehzahl-Drehmomentkennfeld 126 wird in einem Schritt 128 in Abhängigkeit eines Ladezustands 130 eines Energiespeichers 54 des elektrischen Antriebs 52 an den Ladezustand 130 angepasst.

Weiterhin wird das Ansteuersignal 60 im Schritt 118 in Abhängigkeit einer Drehzahl 132 mindestens eines Motors 58 des elektrischen Antriebs 52 bestimmt. Diese Drehzahl 132 sowie auch die aktuell erzeugte Antriebskraft 124 werden gemäß diesem Ausführungsbeispiel bei der Bestimmung der Beschleunigungsanforderung 46 berücksichtigt. Beispielsweise werden die aktuell erzeugte Antriebskraft 124 und die Drehzahl 132 in einem Zustandssignal 62 hierzu vom Anhängerbremssteuergerät 48 zum Bremssteuergerät 32 des Zugfahrzeugs 12 übertragen, nachdem diese zuvor als Statussignal 64 vom elektrischen Antrieb 52 zum Anhängerbremssteuergerät 48 übertragen wurden.

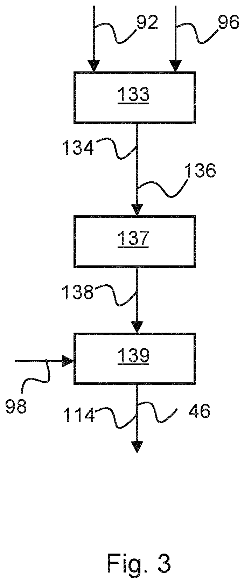

Fig. 3 zeigt die Schritte zum Bestimmen einer Beschleunigungsanforderung 46. Zunächst werden einem Schritt 133, mit dem eine aktuelle Beschleunigung 134 des Zugfahrzeugs 12 bestimmt wird, für die Bestimmung die aktuelle Masse 92 des Zugfahrzeugs 12 sowie die aktuelle Antriebskraft 96 des Zugfahrzeugs 12 zugeführt. Die aktuelle Beschleunigung 134 des Zugfahrzeugs 12 umfasst hierbei einen Wert 136. Der Wert 136 der aktuellen Beschleunigung 134 des Zugfahrzeugs 12 wird dann einem Schritt 137 zugeführt, in dem aus der aktuellen Beschleunigung 134 des Zugfahrzeugs 12 eine gewünschte Beschleunigung 138 des Anhängerfahrzeugs 16 abgeleitet wird. In einem darauffolgenden Schritt des Verfahrens 139 wird in Abhängigkeit der Masse 98 des Anhängerfahrzeugs 16 ein Maximalwert 114 als Beschleunigungsanforderung 46 ausgegeben. Dieser Wert entspricht einem Wert einer gewünschten Antriebskraft 124.

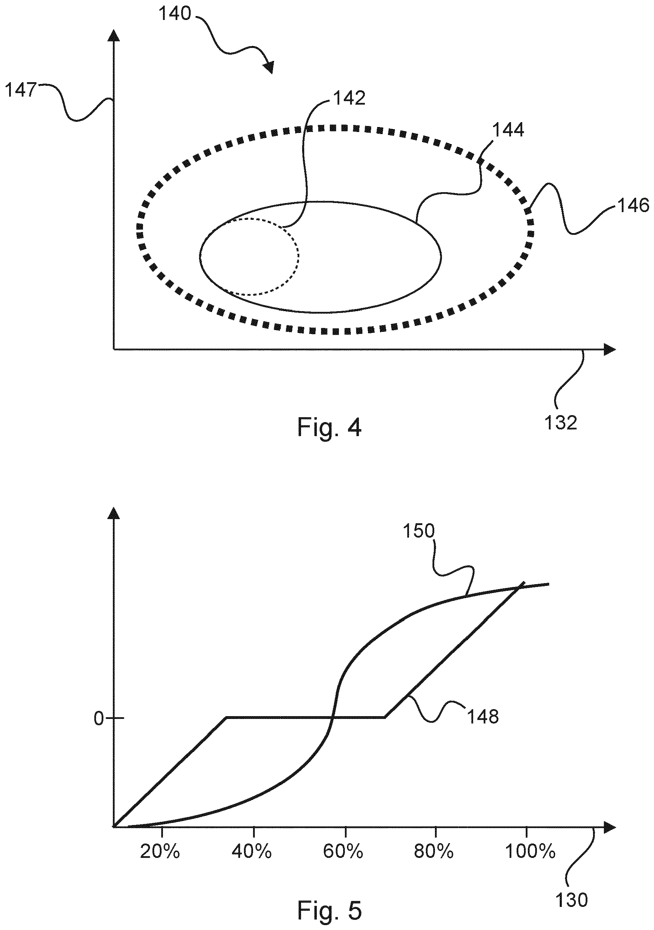

Fig. 4 zeigt ein Beispiel für ein Motordrehzahl-Drehmomentkennfeld 140, das vorzugsweise mehrere Betriebsbereiche 142 bis 146 aufweist. Die Felder umfassen jeweils einen Wertebereich von Kombinationen aus Drehzahl 132 des elektrischen Antriebs 52, die auf der waagerechten Achse aufgetragen ist, und Drehmomenten 124, die auf der senkrechten Achse angegeben sind.

Ein aktueller Betriebsbereich 142 entspricht dem Bereich, in dem der elektrische Antrieb 52 durch das Ansteuersignal 60 vorzugsweise zurzeit betrieben wird, während dieser aktuelle Betriebsbereich 142 innerhalb eines optimalen Betriebsbereichs 144 in Abhängigkeit der aktuellen Drehzahl 132 verschoben werden kann. Der optimale Betriebsbereich 144 kann wiederum in Abhängigkeit des Ladezustands 130 in einem zulässigen Betriebsbereich 146 variieren. Das Kennfeld 140 beschreibt somit Wertebereiche, in denen Kombinationen von Motordrehzahl 132 und Motordrehmoment des elektrischen Motors 58, also der Antriebskraft 124, einstellbar sind und sich gegenüber dem übrigen Bereich abgrenzen, in dem der elektrische Motor 58 nicht betrieben werden soll oder darf.

Fig. 5 zeigt eine Abhängigkeit des Kennfelds 140 vom Ladezustand 130 des Energiespeichers 54, wobei auf der waagerechten Achse der Ladezustand 130 zwischen 0 und 100 % aufgetragen ist und auf der senkrechten Achse eine Anhebung oder Absenkung des optimalen Betriebsbereichs 144 gegenüber einem Nullwert des optimalen Betriebsbereichs 144 angezeigt ist. Eine Anhebung oder Absenkung des optimalen Betriebsbereichs kann entweder intervallweise, was mit der Kurve 148 dargestellt ist, oder dynamisch, was mit der Kurve 150 dargestellt ist, erfolgen.

Im vorliegenden Beispiel befindet sich demnach zwischen etwa 30 und 80 % des Ladezustands 130 der optimale Betriebsbereich 144 im Wesentlichen zentral im zulässigen Betriebsbereich 146, wenn von einer intervallweisen Anpassung ausgegangen wird. Außerhalb dieser Grenzen verschiebt sich der optimale Betriebsbereich 144 entweder nach oben oder nach unten. Ein Betreiben des elektrischen Antriebs 52 mit einem geeigneten Wirkungsgrad ist so möglich.

### Bezugszeichenliste (Bestandteil der Beschreibung)

- 10: Gespann
- 12: Zugfahrzeug
- 14: Deichsel
- 16: Anhängerfahrzeug
- 18: Achsen
- 20a: angetriebene Räder
- 20b: nichtangetriebene Räder
- 21: Raddrehzahlsensoren
- 22: Reibbremse
- 23: Gaspedalstellung
- 24: Gaspedal
- 25: Bremspedalstellung
- 26: Bremspedal
- 27: Wunsch einer Geschwindigkeitserhöhung
- 28: Fahrzeugsteuergerät
- 29: Bremswunsch
- 30: CAN-Bus
- 31: angeforderte positive Beschleunigung
- 32: Bremssteuergerät
- 34: Verbindung
- 46: Beschleunigungsanforderung
- 48: Anhängerbremssteuergerät
- 50: weitere Bus
- 52: elektrischer Antrieb
- 54: Energiespeicher
- 55: Energie
- 56: Umrichter
- 58: elektrische Motoren
- 59: Komponenten des elektrischen Antriebs
- 60: Ansteuersignal
- 62: Zustandssignal
- 64: Statussignal
- 90: Schritt des Verfahrens
- 92: aktuelle Masse des Zugfahrzeugs
- 94: Schritt des Verfahrens
- 96: aktuelle Antriebskraft
- 98: aktuelle Masse des Anhängerfahrzeugs
- 100: Schritt des Verfahrens
- 102: Schritt des Verfahrens
- 104: Schlupf des Zugfahrzeugs
- 105: Schritt des Verfahrens
- 106: aktueller Schlupf des Anhängerfahrzeugs
- 108: Schritt des Verfahrens
- 110: Antriebsdrehmoment
- 112: Schritt des Verfahrens
- 114: Wert, Maximalwert
- 116-118: Schritte des Verfahrens
- 122: Schritt des Verfahrens
- 124: Antriebskraft
- 126: Motordrehzahl-Drehmomentkennfeld
- 128: Schritt des Verfahrens
- 130: Ladezustand
- 132: Drehzahl
- 133: Schritt des Verfahrens
- 134: aktuelle Beschleunigung des Zugfahrzeugs
- 136: Wert
- 137: Schritt des Verfahrens
- 138: gewünschte Beschleunigung des Anhängerfahrzeugs
- 139: Schritt des Verfahrens
- 140: Motordrehzahl-Drehmomentkennfeld
- 142: aktueller Betriebsbereich
- 144: optimaler Betriebsbereich
- 146: zulässiger Betriebsbereich
- 148: Kurve
- 150: Kurve

## Patentansprüche

1. Verfahren zum Ansteuern eines elektrischen Antriebs (52) eines Anhängerfahrzeugs (16) mit einem Zugfahrzeug (12), umfassend die Schritte:
- Bestimmen (90) einer aktuellen Masse (92) des Zugfahrzeugs (12),
- Bestimmen (94) einer aktuellen Antriebskraft (96) des Zugfahrzeugs (12),
- Bestimmen (102) einer Beschleunigungsanforderung (46) in Abhängigkeit der aktuellen Masse (92) des Zugfahrzeugs (12) und der aktuellen Antriebskraft (96) des Zugfahrzeugs (12),
- Ansteuern (118) des elektrischen Antriebs (52) mit einem Ansteuersignal (60) in Abhängigkeit der Beschleunigungsanforderung (46).

2. Verfahren nach Anspruch 1, wobei die Beschleunigungsanforderung (46) zusätzlich in Abhängigkeit einer aktuellen Masse (98) des Anhängerfahrzeugs (16) bestimmt wird, wobei hierzu vorzugsweise die aktuelle Masse (98) des Anhängerfahrzeugs (16) bestimmt (100) wird.

3. Verfahren nach Anspruch 1 oder 2, wobei die Beschleunigungsanforderung (46) einen Wert (114) für eine vom elektrischen Antrieb (52) gewünschte Antriebskraft (124) umfasst, wobei der Wert (114) der gewünschten Antriebskraft (124) bestimmt wird, indem zunächst die aktuelle Beschleunigung (134) des Zugfahrzeugs (12) in Abhängigkeit der aktuellen Antriebskraft (96) des Zugfahrzeugs (12) und der aktuellen Masse (92) des Zugfahrzeugs (12) bestimmt (133) wird, in Abhängigkeit der aktuellen Beschleunigung (134) des Zugfahrzeugs (12) eine gewünschte Beschleunigung (138) des Anhängerfahrzeugs (16) bestimmt (137) wird und in Abhängigkeit der gewünschte Beschleunigung (138) und der aktuellen Masse (98) des Anhängerfahrzeugs (16) der Wert (114) der vom elektrischen Antrieb (52) gewünschten Antriebskraft (124) bestimmt wird.

4. Verfahren nach einem der vorhergehenden Ansprüche, wobei die gewünschte Beschleunigung (138) des Anhängerfahrzeugs (16) kleiner oder gleich der aktuellen Beschleunigung (134) des Zugfahrzeugs (12) gewählt wird und/oder
die aktuelle Beschleunigung (134) des Zugfahrzeugs (12) in Abhängigkeit des Ergebnisses einer Division der aktuellen Antriebskraft (96) des Zugfahrzeugs (12) durch die aktuelle Masse (92) des Zugfahrzeugs (12) bestimmt wird oder diesem Ergebnis entspricht und/oder
der Wert (114) der gewünschten Antriebskraft (124) des Anhängerfahrzeugs (16) in Abhängigkeit des Ergebnisses eines Produkts aus aktueller Masse (98) des Anhängerfahrzeugs (16) und der gewünschten Beschleunigung (138) des Anhängerfahrzeugs (16) ist.

5. Verfahren nach Anspruch 3, wobei die aktuelle Beschleunigung (134) des Zugfahrzeugs (12) zusätzlich in Abhängigkeit eines aktuellen Schlupfs (104) mindestens eines angetriebenen Rades (20a) des Zugfahrzeugs (12) bestimmt wird.

6. Verfahren nach einem der vorhergehenden Ansprüche, wobei die Beschleunigungsanforderung (46) einen Maximalwert (114) für eine mit dem elektrischen Antrieb (52) zu erzeugende oder gewünschte Antriebskraft entspricht oder umfasst und/oder die Beschleunigungsanforderung (46) über einen CAN-ISO 11992-2 Bus (30) von einem Bremssteuergerät (32) des Zugfahrzeugs (12) an ein Anhängerbremssteuergerät (48) des Anhängerfahrzeugs (16) übertragen wird.

7. Verfahren nach einem der vorhergehenden Ansprüche, wobei der elektrische Antrieb (52) eine Antriebskraft (124) in Abhängigkeit eines Ansteuersignals (60) erzeugt, und das Ansteuersignal (60) in Abhängigkeit der Beschleunigungsanforderung (46) sowie eines Ladezustands (130) eines Energiespeichers (54) des elektrischen Antriebs (52) erzeugt wird und/oder das Ansteuersignal (60) in Abhängigkeit mindestens einer aktuellen Drehzahl (132) mindestens eines elektrischen Motors (58) des elektrischen Antriebs (52) erzeugt wird.

8. Verfahren nach einem der vorhergehenden Ansprüche, wobei ein Motordrehzahl-Drehmomentkennfeld (140) festgelegt wird, das vorzugsweise in Abhängigkeit eines Ladezustands (130) eines Energiespeichers (54) des elektrischen Antriebs (52) verschiebbar ist, wobei das Ansteuersignal (60) derart erzeugt wird, dass der elektrische Antrieb (52) ein Antriebsdrehmoment (124) erzeugt, das bei aktueller Drehzahl (132) des elektrischen Motors (58) innerhalb des Motordrehzahl-Drehmomentkennfelds (140), insbesondere eines optimalen Bereichs (144) des Motordrehzahl-Drehmomentkennfelds (140), liegt.

9. Verfahren nach einem der vorhergehenden Ansprüche, wobei der elektrische Antrieb (52) ein Zustandssignal (62), insbesondere über einen CAN-ISO 11992-2 Bus (30), an das Zugfahrzeug (12) sendet, das umfasst, welche Antriebskraft (124) der elektrische Antrieb (52) aktuell erzeugt und/oder welche aktuelle Masse (98) das Anhängerfahrzeug (16) aufweist.

10. Verfahren nach Anspruch 9, wobei das Zustandssignal (62) den aktuellen Schlupf (106) mindestens eines angetriebenen Rades (20a) des Anhängerfahrzeugs (16) umfasst und die Beschleunigungsanforderung (46) zusätzlich in Abhängigkeit des aktuellen Schlupfs (106) des Anhängerfahrzeugs (16) bestimmt wird.

11. Verfahren nach einem der vorhergehenden Ansprüche, wobei das Verfahren mit mindestens einem Bremssteuergerät (32, 48) des Zugfahrzeugs (12) und/oder des Anhängerfahrzeugs (16) ausgeführt wird.

12. Steuergerät (32, 48), insbesondere eines Zugfahrzeugs (12) oder eines Anhängerfahrzeugs (16), zum Ausführen des Verfahrens nach einem der Ansprüche 1 bis 11, wobei das Steuergerät (32, 48) vorzugsweise ein Bremssteuergerät (32) oder ein Anhängerbremssteuergerät (48) ist.

13. Zugfahrzeug (12) mit einem Steuergerät (32, 48) nach Anspruch 12, das ein Bremssteuergerät ist (32).

14. Anhängerfahrzeug (16) mit einem Steuergerät (32, 48) nach Anspruch 12, das ein Anhängerbremssteuergerät (48) ist.

15. Gespann (10), umfassend ein Zugfahrzeug (12) nach Anspruch 13 und ein Anhängerfahrzeug (16) nach Anspruch 14.

## Claims

1. Method for actuating an electric drive (52) of a trailer vehicle (16) with a towing vehicle (12), comprising the steps of:
- determining (90) a current mass (92) of the towing vehicle (12),
- determining (94) a current drive force (96) of the towing vehicle (12),
- determining (102) an acceleration requirement (46) on the basis of the current mass (92) of the towing vehicle (12) and the current drive force (96) of the towing vehicle (12),
- actuating (118) the electric drive (52) by means of an actuation signal (60) on the basis of the acceleration requirement (46).

2. Method according to claim 1, wherein the acceleration requirement (46) is additionally determined on the basis of a current mass (98) of the trailer vehicle (16), wherein the current mass (98) of the trailer vehicle (16) is preferably determined (100) for this purpose.

3. Method according to either claim 1 or claim 2, wherein the acceleration requirement (46) comprises a value (114) for a desired drive force (124) of the electric drive (52), wherein the value (114) of the desired drive force (124) is determined by the current acceleration (134) of the towing vehicle (12) first being determined (133) on the basis of the current drive force (96) of the towing vehicle (12) and the current mass (92) of the towing vehicle (12), a desired acceleration (138) of the trailer vehicle (16) being determined (137) on the basis of the current acceleration (134) of the towing vehicle (12), and the value (114) of the desired drive force (124) of the electric drive (52) being determined on the basis of the desired acceleration (138) and the current mass (98) of the trailer vehicle (16).

4. Method according to any of the preceding claims, wherein the desired acceleration (138) of the trailer vehicle (16) is selected to be less than or equal to the current acceleration (134) of the towing vehicle (12), and/or
the current acceleration (134) of the towing vehicle (12) is determined on the basis of the result of a division of the current drive force (96) of the towing vehicle (12) by the current mass (92) of the towing vehicle (12), or corresponds to said result, and/or
the value (114) of the desired drive force (124) of the trailer vehicle (16) is dependent on the result of a product of the current mass (98) of the trailer vehicle (16) and the desired acceleration (138) of the trailer vehicle (16).

5. Method according to claim 3, wherein the current acceleration (134) of the towing vehicle (12) is additionally determined on the basis of a current slip (104) of at least one driven wheel (20a) of the towing vehicle (12).

6. Method according to any of the preceding claims, wherein the acceleration requirement (46) corresponds to or comprises a maximum value (114) for a drive force to be generated by the electric drive (52) or a desired drive force, and/or the acceleration requirement (46) is transmitted from a brake control device (32) of the towing vehicle (12) to a trailer brake control device (48) of the trailer vehicle (16) via a CAN-ISO 11992-2 bus (30).

7. Method according to any of the preceding claims, wherein the electric drive (52) generates a drive force (124) on the basis of an actuation signal (60), and the actuation signal (60) is generated on the basis of the acceleration requirement (46) and a charge state (130) of an energy store (54) of the electrical drive (52), and/or the actuation signal (60) is generated on the basis of at least one current rotational speed (132) of at least one electric motor (58) of the electric drive (52).

8. Method according to any of the preceding claims, wherein a motor speed torque map (140) is established, which is preferably movable on the basis of a charge state (130) of an energy store (54) of the electric drive (52), wherein the actuation signal (60) is generated such that the electric drive (52) generates a drive torque (124) which is within the motor speed torque map (140), in particular an optimal range (144) of the motor speed torque map (140), at the current speed (132) of the electric motor (58).

9. Method according to any of the preceding claims, wherein the electric drive (52) transmits a state signal (62) to the towing vehicle (12), in particular via a CAN ISO 11992-2 bus (30), which state signal comprises the current drive force (124) generated by the electric drive (52) and/or the current mass (98) of the trailer vehicle (16).

10. Method according to claim 9, wherein the state signal (62) comprises the current slip (106) of at least one driven wheel (20a) of the trailer vehicle (16), and the acceleration requirement (46) is additionally determined on the basis of the current slip (106) of the trailer vehicle (16).

11. Method according to any of the preceding claims, wherein the method is carried out by at least one brake control unit (32, 48) of the towing vehicle (12) and/or of the trailer vehicle (16).

12. Control unit (32, 48), in particular of a towing vehicle (12) or a trailer vehicle (16), for carrying out the method according to any of claims 1 to 11, wherein the control unit (32, 48) is preferably a brake control unit (32) or a trailer brake control unit (48).

13. Towing vehicle (12) comprising a control unit (32, 48) according to claim 12, which is a brake control unit (32).

14. Trailer vehicle (16) comprising a control unit (32, 48) according to claim 12, which is a trailer brake control unit (48).

15. Combination (10) comprising a towing vehicle (12) according to claim 13 and a trailer vehicle (16) according to claim 14.

## Revendications

1. Procédé pour la commande d'un entraînement électrique (52) d'un véhicule remorque (16) comportant un véhicule tracteur (12), comprenant les étapes :
- de détermination (90) d'une masse (92) actuelle du véhicule tracteur (12),
- de détermination (94) d'une force d'entraînement (96) actuelle du véhicule tracteur (12),
- de détermination (102) d'une demande d'accélération (46) en fonction de la masse (92) actuelle du véhicule tracteur (12) et de la force d'entraînement (96) actuelle du véhicule tracteur (12),
- de commande (118) de l'entraînement électrique (52) au moyen d'un signal de commande (60) en fonction de la demande d'accélération (46).

2. Procédé selon la revendication 1, la demande d'accélération (46) étant déterminée en outre en fonction d'une masse (98) actuelle du véhicule remorque (16), la masse (98) actuelle du véhicule remorque (16) étant de préférence déterminée (100) à cette fin.

3. Procédé selon la revendication 1 ou 2, la demande d'accélération (46) comprenant une valeur (114) pour une force d'entraînement (124) souhaitée de l'entraînement électrique (52), la valeur (114) de la force d'entraînement (124) souhaitée étant déterminée en déterminant (133) en premier l'accélération (134) actuelle du véhicule tracteur (12) en fonction de la force d'entraînement (96) actuelle du véhicule tracteur (12) et de la masse (92) actuelle du véhicule tracteur (12), une accélération (138) souhaitée du véhicule remorque (16) étant déterminée (137) en fonction de l'accélération (134) actuelle du véhicule tracteur (12) et la valeur (114) de la force d'entraînement (124) souhaitée de l'entraînement électrique (52) étant déterminée en fonction de l'accélération (138) souhaitée et de la masse (98) actuelle du véhicule remorque (16).

4. Procédé selon l'une des revendications précédentes, l'accélération (138) souhaitée du véhicule remorque (16) étant choisie inférieure ou égale à l'accélération (134) actuelle du véhicule tracteur (12) et/ou
l'accélération (134) actuelle du véhicule tracteur (12) étant déterminée en fonction du résultat d'une division de la force d'entraînement (96) actuelle du véhicule tracteur (12) par la masse (92) actuelle du véhicule tracteur (12) ou correspondant à ce résultat et/ou
la valeur (114) de la force d'entraînement (124) souhaitée du véhicule remorque (16) étant en fonction du résultat d'un produit de la masse (98) actuelle du véhicule remorque (16) et de l'accélération (138) souhaitée du véhicule remorque (16).

5. Procédé selon la revendication 3, l'accélération (134) actuelle du véhicule tracteur (12) étant déterminée en outre en fonction d'un patinage (104) actuel d'au moins une roue entraînée (20a) du véhicule tracteur (12).

6. Procédé selon l'une des revendications précédentes, la demande d'accélération (46) correspondant à ou comprenant une valeur maximale (114) pour une force d'entraînement souhaitée ou à générer au moyen de l'entraînement électrique (52) et/ou la demande d'accélération (46) étant transmise à travers un bus CAN-ISO 11992-2 (30) d'un appareil de commande de frein (32) du véhicule tracteur (12) à un appareil de commande de frein de remorque (48) du véhicule remorque (16).

7. Procédé selon l'une des revendications précédentes, l'entraînement électrique (52) générant une force d'entraînement (124) en fonction d'un signal de commande (60), et le signal de commande (60) étant généré en fonction de la demande d'accélération (46) ainsi que d'un état de charge (130) d'un accumulateur d'énergie (54) de l'entraînement électrique (52) et/ou le signal de commande (60) étant généré en fonction d'au moins une vitesse de rotation (132) actuelle d'au moins un moteur électrique (58) de l'entraînement électrique (52).

8. Procédé selon l'une des revendications précédentes, un champ caractéristique de couple de vitesse de rotation de moteur (140) étant fixé, lequel peut être de préférence décalé en fonction d'un état de charge (130) d'un accumulateur d'énergie (54) de l'entraînement électrique (52), le signal de commande (60) étant généré de telle façon que l'entraînement électrique (52) génère un couple d'entraînement (124) qui se situe, pour la vitesse de rotation (132) actuelle du moteur électrique (58), dans le champ caractéristique de couple de vitesse de rotation de moteur (140), en particulier dans une zone optimale (144) du champ caractéristique de couple de vitesse de rotation de moteur (140).

9. Procédé selon l'une des revendications précédentes, l'entraînement électrique (52) envoyant, en particulier à travers un bus CAN-ISO 11992-2 (30), un signal d'état (62) au véhicule tracteur (12), lequel comprend quelle force d'entraînement (124) l'entraînement électrique (52) génère actuellement et/ou quelle masse (98) actuelle le véhicule remorque (16) présente.

10. Procédé selon la revendication 9, le signal d'état (62) comprenant le patinage (106) actuel d'au moins une roue entraînée (20a) du véhicule remorque (16) et la demande d'accélération (46) étant déterminée en outre en fonction du patinage (106) actuel du véhicule remorque (16).

11. Procédé selon l'une des revendications précédentes, le procédé étant exécuté au moyen d'au moins un appareil de commande de frein (32, 48) du véhicule tracteur (12) et/ou du véhicule remorque (16).

12. Appareil de commande (32, 48), en particulier d'un véhicule tracteur (12) ou d'un véhicule remorque (16), pour l'exécution du procédé selon l'une quelconque des revendications 1 à 11, l'appareil de commande (32, 48) étant de préférence un appareil de commande de frein (32) ou un appareil de commande de frein de remorque (48).

13. Véhicule tracteur (12) comportant un appareil de commande (32, 48) selon la revendication 12, lequel est un appareil de commande de frein (32).

14. Véhicule remorque (16) comportant un appareil de commande (32, 48) selon la revendication 12, lequel est un appareil de commande de frein de remorque (48).

15. Attelage (10), comprenant un véhicule tracteur (12) selon la revendication 13 et un véhicule remorque (16) selon la revendication 14.
